# EUROPEAN PATENT SPECIFICATION

(11) **EP 0 635 424 B1**
(45) Date of publication and mention of the grant of the patent: **12.03.1997**
(21) Application number: 94115475.9
(22) Date of filing: 28.05.1991
(51) Int. Cl.: B63B 9/06, B63B 3/20, B63B 3/22, B63B 3/12

(54) **Vessel hull, construction method, and assembly fixture**
Schiffsrumpf, Baumethode, und Montagegerät
Coque de bateau, méthode de construction, et installation de montage

(30) Priority: 05.06.1990 US 532329
(43) Date of publication of application: 25.01.1995
(62) Divisional of application: 91304788.2
(73) Proprietor: METRO MACHINE CORPORATION, Norfolk, Virginia 23501 (US); MARINEX INTERNATIONAL INC., Hoboken, New Jersey 07030 (US)
(72) Inventor: Cuneo, Joseph J., Hastings on the Hudson, New York 10706 (US); Garland, Charles, Williamsburg, Virginia 23185 (US); Goldbach, Richard A., Norfolk, Virginia 23517 (US); Goldbach, Robert D., Hoboken, New Jersey 07030 (US); McConnell, Frank E., Norfolk, Virginia 23517 (US); Tornay, Edmund G., New York, New York 10128 (US)
(74) Representative: Laight, Martin Harvey

(56) References cited:
- WO-A-87/02086
- FR-A- 2 483 877
- GB-A- M20 479
- GB-A- 2 143 182
- US-A- 2 353 260
- US-A- 4 638 754

## Description

The present invention relates to a fixture for fabricating a longitudinal sub assembly for a vessel hull.

The present specification contains some subject matter in common with the specification EP-A-0,460,851 (EPA 91304788.2) and has been divided therefrom.

In the U.S. patent to Tornay, 4,638,754, issued January 27, 1987, there is disclosed a vessel hull and construction method, which is said to be particularly suitable for vessels of double hull construction, such as gas tankers with almost complete double hulls, and oil and product tankers with double bottoms. The disclosed system is said to be suitable for construction of commercial and naval ships and barges, and to be adaptable to provide any arrangement of decks and bulkheads within the hull.

In the construction system disclosed in the Tornay patent, the plating of the outer hull and bulkheads is constructed of standard-sized steel plates, usually about 8 feet by 40 feet, which are rolled to a slight cylindrical curvature, the axis of which is parallel to the longer edge. On the shell of the vessel, the plates are arranged with their long edges longitudinal. The plates are arranged with the curvature inwards or outwards, depending on the direction of the highest local load. The curved plates are then provided with a reverse bend or recurve along the midline between the long longitudinal edges. The short transverse edges and the long longitudinal edges are butt-welded together. To the midline of the plates at the recurve are welded longitudinal steel girders such as L or T-beams which match the recurved portion of the curved plates and are of sufficient depth and section modulus to span the distance between transverse bulkheads or deep webs. The local pressure loading on the plate causes a tensile or compressive stress, depending on the direction of the load, uniformly across the thickness of the curved plate in the same way that a cylindrical pressure vessel is stressed by an internal pressure. Because the plating is not subjected to local panel bending, closely spaced primary stiffeners are said to be not required. In addition to efficiently absorbing local pressure forces such as transverse membrane stresses, the curve and reverse curve also are said to provide stiffness in the longitudinal direction needed to resist compressive buckling caused by longitudinal hull bending stresses. An additional efficiency is said to be obtained from the girders along the midline of the curved plates, and thus contribute to the principal section modulus of the hull needed to resist longitudinal bending.

Such details of the construction as orientation of each module while being constructed, the method and means for performing the welding of module elements to one another, and of modules to one another, jigs or fixtures useful during module fabrication or joining, and module handling and manipulation apparatus and techniques do not appear to be presented in the Tornay patent, leading one to conclude that no non-conventional methods or means for construction were contemplated.

Shipfitting is the most technically demanding and time-consuming element of subassembling vessel hull sections. Shifting, holding, bending and trimming of plates and other elements is necessary so that welding can be satisfactorily accomplished and so that subassemblies can be assembled to one another to provide a hull that meets specifications.

The techniques of electroslag/electrogas welding generally require the use of a continuous cooling shoe on the back-sides of T-joints while welding is being accomplished. In prior art construction techniques using electroslag/ electrogas welding, efficiency has been penalized due to the time needed to set-up and provide cooling water plumbing to the cooling shoe.

Shipfitting and welding of vessel hulls as heretofore practiced in even the most highly rationalized construction facilities has necessitated that the construction workers have a lot of training and possess a wide range of skills. Increasing scarcity of trained workers possessing such a broad range of skills has driven-up labor costs to the point where vessel hulls cannot be profitably fabricated in many areas.

Conventional fabrication techniques also have made extensive use of temporary shipfitting devices, many of which are welded-on in normal practice, necessitating a considerable amount of surface preparation and painting after the devices are disconnected from the work.

Also in the prior art are assembly lines for flat panels. A typical panel assembly line comprises a long conveyor along which are mounted devices for assembling and welding steel sheets into panels each weighing, for instance, from 10 to 50 tons. Flat panels, when assembled to provide hulls, require the use of transverse framing crossing longitudinal framing.

If vessel hulls are constructed in modules that are sequentially connected to form the hull, and an attempt is made to do so on land, the land crane that would need to be used is expensive, and, should it become no longer needed due to eventual curtailing of the project, can be expected to have lost considerable value.

Land-based assembly might use a plurality (e.g., from six to ten) mobile cranes on pile-supported tracks. These are expensive to buy, install and maintain.

Two shipyards (neither of which is still operating), known to the present inventors, formerly used modular assembly and erection procedures for constructing vessel hulls.

One of these, the Erie yard of Litton Industries, built 1000-foot long ore carrier midbodies. (A tanker/carrier "midbody" is the main portion of the length of such a vessel, but for the bow and stern sections, that is of substantially constant transverse cross-sectional size and shape.)

At the Erie yard, midbody modules were each built in an upended spatial disposition (one which will be referred to herein as being "vertical"). These modules were built in the extreme end of the same graving dock that was used for joining the modules to one another and for joining purchased bow and stern units to the midbody. The modules weighed 600 tons each, and an electro-hydraulic jacking device was used for forming the individual upended modules over into a horizontal orientation for serial joining to form the midbody. The hydraulic jacking device, one of the largest ever made, was expensive to purchase, install and maintain. Failure of the device would have posed a serious threat to human life, and to the graving dock, which was the most expensive and indispensable facility at the Erie yard.

(Graving docks, such as the one at Erie, use stationary civil construction including pilings, concrete, fill, and piping embedded in the concrete of the dock floor. Pumps are continuously operated for relieving the dock, through the pipes, of water seepage through the dock floor. A graving dock functions much as if it were a bathtub with a gate at one end to let a vessel in and out. The level of the floor is sufficiently below the level of the adjoining body of water to permit the vessel being built or dry-docked to float clear of the blocking on the floor of the dock when the graving dock is filled with water by opening valves connected to that adjoining body of water. The concrete floor of a graving dock typically is supported by piling that is adequate to support the full weight of the vessel when the graving dock is empty of water. The perimeter wall of a graving dock, is constructed high enough to keep water out (except for seepage), at the highest tide for which the facility is designed to encounter.)

The module assembly area at the Erie yard was not accessible to heavy-lift floating derricks. Therefore, each subassembly had to be lifted using a land crane, often reaching to or beyond the maximum for which it was designed. The crane lifting and reaching capabilities acted as limits on the size and weight of individual midbody modules which could be fabricated at the Erie yard.

The fact that the graving dock at the Erie yard was constructed in place and fixed in its location meant that it had limited residual value, it could not be floated away and used elsewhere once there was no longer need for it at Erie.

One other shipyard at which modular assembly and erection procedures were used for constructing carrier/tanker vessel hulls, was the Arandal yard in Gotverken, Sweden. At the Gotverken yard, oil tankers were built in a graving dock. One end of the graving dock was located inside an enclosed building. Modules were assembled horizontally, one after another, at a single station located in the building, and then moved out into position in the open end of the graving dock. Probably the movement was accomplished on rollers. Because the modules were constructed horizontally, there was reduced accessibility for steel assembly and piping installation, compared with vertical construction, where a module being constructed is open at the top rather than at the side.

Caissons are commonly used for underwater work, e.g., for the construction of bridge piers. It is believed by the present inventors that caissons may have been used in the past for joining vessel hull sections.

Large underwater grids have been used under floating dry docks to stabilize them as ships were transferred off a floating dry dock onto land, or from land onto a floating dry dock. A ship construction facility known as the Ingalls launching pontoon uses this technique.

The task of inspecting and maintaining conventional double-bottomed vessel hulls incorporated in carriers for bulk fluids and/or particulate material such as oil, liquified gases, chemicals, ore and grain is difficult. With traditional egg crate-like stiffening structures provided longitudinally and transversely between the bottoms, the process is one of climbing-over, ducking-under and squeezing through girders and plates in a constantly couched position, with poor ventilation (unless "moon suits" are worn), poor footing, little to hold onto for support, while needing to carry illumination means, and trying one's best to locate anomalies in surfaces the expected color of which is itself dirt colored or rust colored.

In US-A-4,476,797 (Ivanov et al), equivalent to FR-A-2,483,877, there is disclosed a method of assembling a ship hull module comprising a transverse bulkhead section and two pairs of sections perpendicular thereto, for example a bottom section and a deck section in one pair, and a side section and a bulkhead section in another pair. Initially the transverse bulkhead section is installed in a horizontal position, and then one of the sections perpendicular to the transverse bulkhead is installed in a vertical position and joined to the transverse bulkhead. The assembled portion of the module is turned about a vertical axis, and a further section is installed in a vertical position and joined to the already assembled portion of the module. The assembled portion of the module is again turned about the vertical axis, and the remaining sections are added one by one in vertical position, and joined to the assembled portion of the module. The first section is welded to the transverse bulkhead, and the succeeding sections are each welded to the already assembled portion of the module.

In accordance with the present invention there is provided a longitudinal subassembly fixture for fabricating subassemblies for a vessel hull, said fixture comprising means for supporting components of a subassembly and means for welding vertical joints between the components, characterised in that the supporting means comprises: three rows of vertical towers arranged as one inner row of towers, and two outer rows of towers located on opposite sides of said inner row; each tower in said inner row having four working faces, arranged as two facing respective ones of said outer rows of towers, and two facing in opposite directions along said inner row of towers; each tower in said outer rows having one working face facing towards said inner row of towers; each working face having mounted thereto a respective frame means, the frame means of the towers being arranged in pairs; each frame means in each pair being mounted to its respective tower by jack means for movement towards and away from the respective tower, and within each pair of frame means, the two respective frame means being provided with complementary surfaces for engaging and holding between them a respective plate; and said welding means being mounted to said towers and arranged for welding vertical T-joints between respective abutting edges of respective groups of three plates while such plates are engaged and held between adjoining pairs of frame means.

The fixture according to the invention may be used for fabricating subassemblies for modules for a parallel midbody for a double hull vessel. A plurality of like modules may be serially weldedly connected end-to-end to provide a parallel midbody for a vessel hull. A vessel hull bow section may be weldedly connected to one end of said midbody, and a vessel hull stern section weldedly connected to the opposite end of said midbody, to provide a vessel hull.

It may be arranged that each frame means on a tower in an outer row spacedly confronts a frame means on a tower in said inner row, and each frame means on an inner row tower which is provided on a face which faces along said inner row spacedly confronts another said frame means on an adjacent said inner row tower; each frame means in each pair being mounted to the respective tower by said jack means for movement such that within each pair of frame means, each frame means can be forced into closer relation with the other and released to move away from the other; and the respective frame means being arranged for engaging and holding the respective plates between them with a predetermined shape and spatial orientation, with two of such plates engaged and held between adjoining pairs of frames means respectively mounted one frame means to a tower in said inner row and a tower in said outer row, and with the other one of such plates engaged and held between a respective pair of frame means respectively mounted one frame means each to two adjoining towers in said inner row.

It may be arranged that each said pair of frame means which includes one frame means mounted to a tower in one outer row and another frame means mounted to a tower in said inner row has said complementary surfaces thereof configured for engaging and holding a plate which is cylindrically arcuate about a vertical axis.

It may also be arranged that the pairs of said frame means which are mounted between the towers in one of said outer rows and the towers in said inner row, and the pairs of said frame means which are mounted between the towers in the other of said outer rows and the towers in said inner row all have the complementary surfaces thereof oriented to hold respective curved plates so that the curvatures thereof are all convex in the same direction.

In a preferred form said means for welding vertical T-joints comprises, for each T-joint, a vertically travelling electroslag welder, and two cooling shoes, one mounted at each of two respective corners of adjoining ones of said inner row towers.

In accordance with the invention, the fixture may be used in association with apparatus for assembling a bulkhead with a plurality of longitudinal subassemblies for a module for a parallel midbody for a double hull vessel comprising: means for supporting a horizontally extending bulkhead susceptible to being rotated about a vertical axis a derrick for lifting and depositing a succession of longitudinal subassemblies for a module for a parallel midbody for a double hull vessel, said derrick being adapted to lift said subassemblies and set each in place around the perimeter of said bulkhead, whereby said bulkhead may be rotated between uses of the derrick to place said subassemblies successively thereon, and whereby said subassemblies may be welded to one another and to said bulkhead. In some arrangements the means for supporting the horizontally extending bulkhead is arranged on a variable buoyancy barge.

The assembly fixture and associated apparatus for assembling a bulkhead may be used in a vessel hull construction method, comprising: (a) a providing a first set of cylindrically curved rectangular steel plates serially arranged edge-to-edge, all convex in one direction with all axes of curvature vertically oriented; (b) providing a second set of cylindrically curved rectangular steel plates serially arranged edge-to-edge, all convex in said one direction with all axes of curvature vertically oriented; (c) providing a further set of vertically arranged rectangular steel plates each having one longitudinal edge disposed adjacent edges of two adjoining one of said steel plates in said first set and an opposite longitudinal edge disposed adjacent edges of two adjoining ones of said steel plates in said second set to provide respective T-joint sites; while holding each said plate by engagement with both opposite faces thereof for maintaining a desired shape and position for each said plate, welding a respective T-joint at each said T-joint site; and (d) releasing said plates from being held, and thereby obtaining a double-walled hull subassembly. The method may further comprise: (e) repeating steps (a) - (d) a plurality of times to provide a plurality of like subassemblies; (f) arranging said plurality of said subassemblies in a series around a bulkhead; and (g) welding corresponding edges of corresponding plates on adjoining ones of said subassemblies to one another and welding said subassemblies to said bulkhead to thereby provide a double-hull module having a floor portion and two laterally opposite side portions.

Preferably steps (f) and (g) are conducted while said steel plates, and therefore said module, remain vertically oriented.

Also preferably steps (a) - (e) are conducted in a land-based fixture, and steps (f) and (g) are conducted on board a variable buoyancy barge, with the aid of a floating derrick which successively lifts individual ones of said subassemblies from said fixture and later places them on said barge in said series around said bulkhead; and wherein said barge is sunk onto a fixed support each time a subassembly is to be placed thereon, and between at least sometimes that two subassemblies are successively placed thereon, said barge is increased in buoyancy so as to float above said fixed support and is floatingly shifted in order to bring a site where a next subassembly will be placed, into more convenient disposition relative to said land-based fixture.

It is further preferred that said welding of said T-joints is accomplished by electroslag welding, with cooling being provided along both faces of each plate in said second set as the respective T-joint is being welded. Preferably said welding of said T-joints is accomplished by electrogas welding, with cooling being provided along both faces of each plate in said second set as the respective T-joint is being welded. Also preferably in step (c), all of said T-joints are simultaneously welded at all of said T-joint sites.

It is also preferred that said holding of step (c) and said releasing of step (d) are respectively accomplished by setting and releasing hydraulically operated horizontally acting jacks mounted to respective towers.

Various preferred and optional features and combinations of features of the invention will now be described. It is particularly to be appreciated that the following statements relate only to preferred or optional or exemplary features and do not set out essential features of the invention.

A fixture embodying the present invention may be used to provide a double-hull vessel which utilizes an amount of steel that is comparable to that needed for construction of a conventional single-hull segregated ballast tanker of the same size, whereas double-hull tankers of conventional construction require 5 to 15 percent more steel.

A fixture embodying the invention may be used for converting existing single hull tankers by midbody replacement with double-hull midbodies produced in accordance with the present invention, and reuse of the pre-existing bow and stern sections, thus recovering useful life from existing structures which might otherwise need to be scrapped.

The invention provides a novel means for constructing the double-hulled midbody of a cargo tanker by fabricating module subassemblies vertically in a fixture, assembling the subassemblies into a module vertically, launching each module vertically then righting each module and joining each successively to the growing structure, with conventional bow and stern sections being joined to the opposite ends of the midbody. Each module preferably is approximately 50 feet tall as fabricated, and therefore about 50 feet long when righted.

Each module may incorporate six similar, if not identical, module subassemblies, thereby permitting a high degree of standardization of steel parts in the cargo tank sections of double hull tankers.

(The term "tanker" is used generically herein, without regard to whether the vessel will carry liquid, gaseous and/or particulate solid material or any combination thereof.)

The vessel hull and construction method of the present invention uses less steel than is conventionally used for producing a double-hulled tanker of the same DWT capacity, requires less labor hours per ton of steel fabricated into hull, can use a higher percentage of automatic welding, including vertical electroslag and/or electrogas welding (with resulting higher quality and lower cost), reduces the need for higher-cost steel shapes such as I-beams and T-bars, substantially reduces the absolute number of pieces of steel which must be handled and assembled (thereby significantly reducing cost and time), reduces total welding necessary, facilitates and reduces the cost of blasting and painting (and abatement of environmental impact of these processes), and permits improvement in the quality of finished painting for the vessel hull.

Embodiments of the invention will now be described by way of example with reference to the accompanying drawings in which:-
Figure 1 is a schematic top-plan view of a production line for prefabricated panels for double-hull module longitudinal subassemblies;
Figure 2 is a pictorial view of a flame planer of the production line shown in Figure 1;
Figure 3 is a pictorial view of a flame bender of the production line shown in Figure 1;
Figure 4 is a pictorial view of a robotic installation and tack welding station for providing longitudinal panels with kick plate stiffeners on the production line shown in Figure 1;
Figure 5 is a pictorial view of a station for coating the tops and bottoms of panels with paint on the production line shown in Figure 1;
Figure 6 is a pictorial view of a barge loaded with one module's complement of longitudinal panels as produced on the production line shown in Figure 1, ready for movement to a subassembly area;
Figure 7 is a pictorial view of a subassembly area;
Figure 8 is a pictorial view of a longitudinal subassembly fixture embodying the present invention at the longitudinal subassembly area shown in Figure 7;
Figure 9 is a top-plan view of the longitudinal subassembly fixture;
Figure 10 is a larger scale fragmentary top-plan view of the longitudinal subassembly fixture;
Figure 11 is a pictorial view showing workers installing a panel in the fixture of Figures 8-10;
Figure 12 is a fragmentary pictorial view of the top of the longitudinal subassembly fixture showing bar supports on rollers at the tops of individual outside towers thereof;
Figure 13 is a pictorial view similar to Figure 12 showing the hanging basket-type staging device used at each T-joint intersection of longitudinal panels for cleaning and welding of the joints;
Figure 14 is a pictorial view showing the apparatus of Figure 13 being used to create a welded T-joint at the intersection of two hull plates and a longitudinal stiffener plate;
Figure 15 is a pictorial view showing the longitudinal subassembly fixture after welding of the panels into a hull midbody module has been completed and the hydraulic jacks have been released, allowing a floating derrick to remove the module to a touch-up, blast and final paint room of the subassembly area shown in Figure 7;
Figure 16 is a pictorial view of a module assembly pontoon fixture with a bulkhead subassembly already positioned thereon, and individual fully painted hull midbody modules being placed thereon by a floating derrick;
Figure 17 is another pictorial view of the apparatus shown in Figure 16, from a different perspective, after another hull module has been put in place on the bulkhead assembly on the module assembly pontoon fixture;
Figures 18A-18E are a series of five side-elevational views, partly in section, of erection (tilting over from a vertical orientation to a horizontal orientation of a hull midbody module, which is then floated towards a module joining facility for joining to previously positioned structure);
Figure 19 is a side-elevation view of the module erection pontoon and supporting grid with separate view of sinking the module erection pontoon to float the module;
Figure 20 is a pictorial view of the module joining facility, at a later stage than depicted in Figures 18 and 19, and with the water omitted so as to show the supporting structure and module-joining pontoon caisson;
Figure 21 is a transverse-sectional view of the module joining facility;
Figure 22 is a side-elevational view of the module joining facility;
Figure 23 is a transverse sectional view of the module joining facility at the location of the module joining pontoon caisson.
Figure 24 is a transverse cross-sectional view of a double-hulled vessel, through the midbody thereof, constructed in accordance with principles of the present invention, a bulkhead being illustrated in the left half of the view;
Figure 25 is an enlarged scale fragmentary transverse cross-sectional view thereof showing the region where two longitudinal hull subassemblies join a duct keel;
Figure 26 is an enlarged scale fragmentary transverse cross-sectional view of the vessel hull of Figure 24, showing the region where two longitudinal hull subassemblies join one another at the bottom-to-side transition; and
Figure 27 is an enlarged scale fragmentary transverse cross-sectional view of the vessel hull of Figure 24, showing the region where a longitudinal hull subassembly joins the underside of the outer margin of the deck structure (which may be conventional, as may be the bow and stern sections of the vessel).

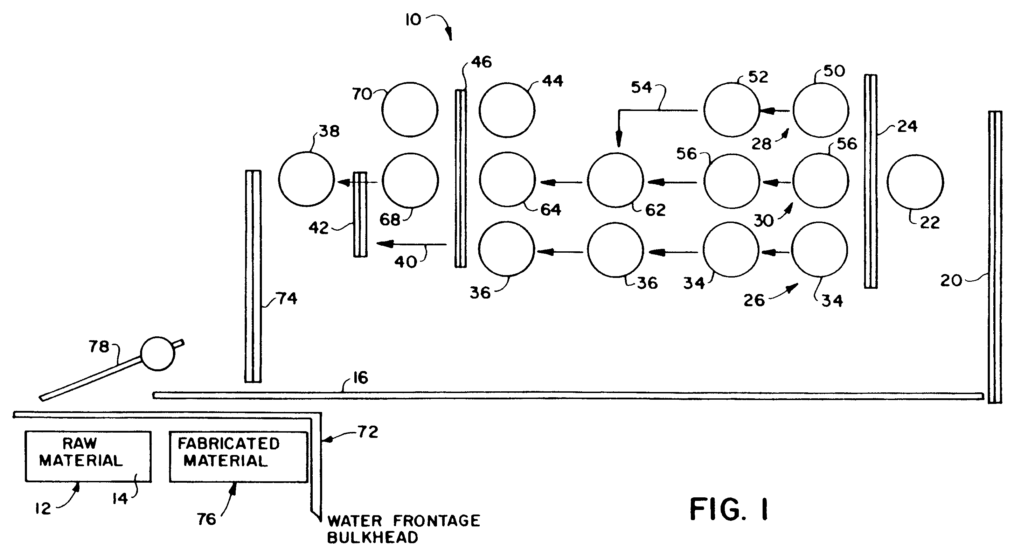

Production of the double-hulled vessel midbody for a vessel hull preferably begins on the production line that is schematically depicted at 10 in Figure 1.

Raw steel plate, most of it 0.5 to 1.0 inch thick and approximately 8 feet wide and 48 feet long is procured from a steel mill, received by barge 12 and stored flat as raw material 14. As processing begins, steel plates are individually transferred from the barge 12 onto a roller conveyor 16 using an electromagnet-type grasping device-equipped crane (not shown). At the opposite end of the conveyor 16, the steel plates are transferred to a trolley car 20 which takes them to a steel shot abrasive cabinet 22 where mill scale is conventionally removed from the plate. A further trolley car 24 transfers the descaled plates to one of three fabricating lines 26, 28, 30.

The line 26 processes about 45 percent of the incoming tonnage of plates 14 and produces curved longitudinal panels 32.

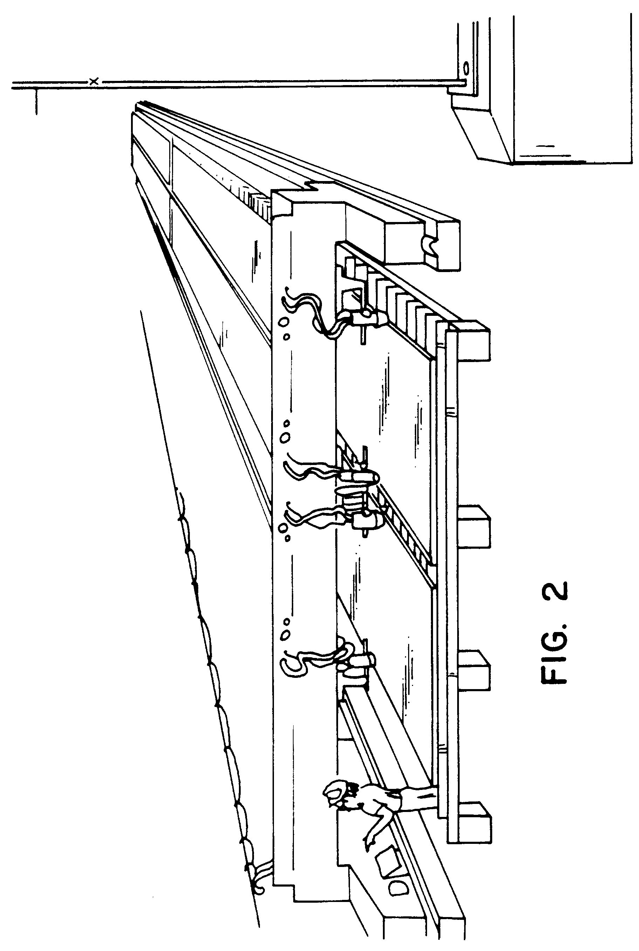

First, plates 14 are cut to desired final dimensions using conventional flame planers 34 (Figures 1 and 2).

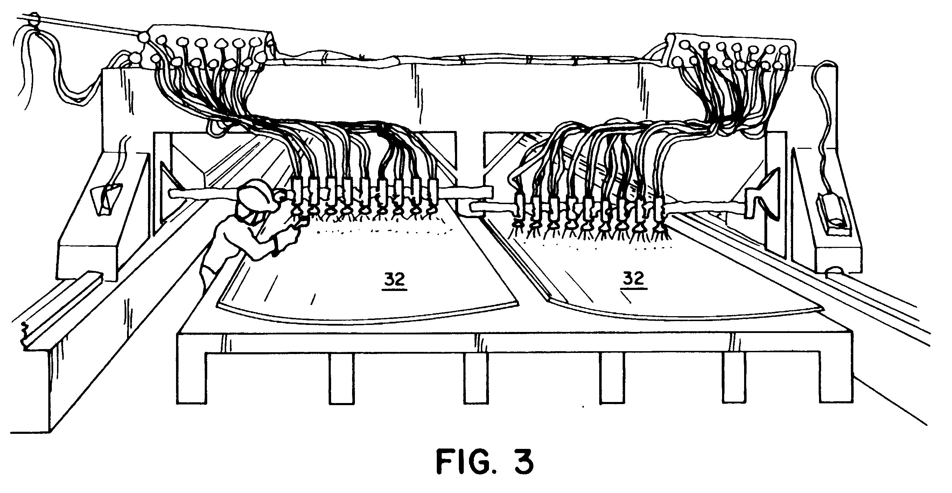

Next, the trimmed plates are formed into panels 32 having the desired curvature using a conventional flame benders 36 (Figures 1 and 3).

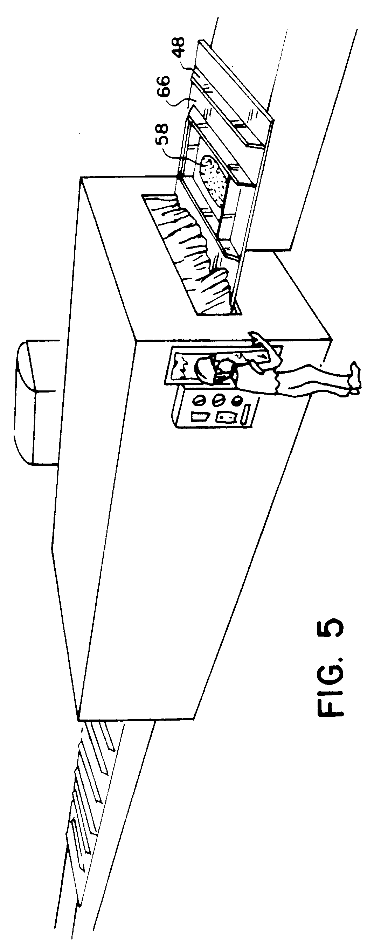

Acceptable curved panels 32 are transferred to a painting station 38 (Figures 1 and 5) via conveyor 40 and trolley car 42.

Curved panels requiring further work are transferred to a repair station 44 by a trolley car 46 and, upon completion of repairs, transferred back into the normal curved panel production line and further processed as acceptable curved panels.

The line 28 processes about 10 percent of the incoming tonnage of plates 14 and produces kick plate stiffeners 48 for the flat longitudinal panels 66.

On the line 28, the plate is flame cut at 50 into strips of desired width (e.g., approximately 6 inches in width), and then sheared at 52 to the desired length and 45-degree end configuration. The completed kick plate stiffeners 48 are conveyed at 54 to an intermediate station on the flat panel production line 30.

On the line 30, plate 14 is cut at 56 to the desired final dimensions and configuration using an automatic burning machine (for cutting out lightening holes 58).

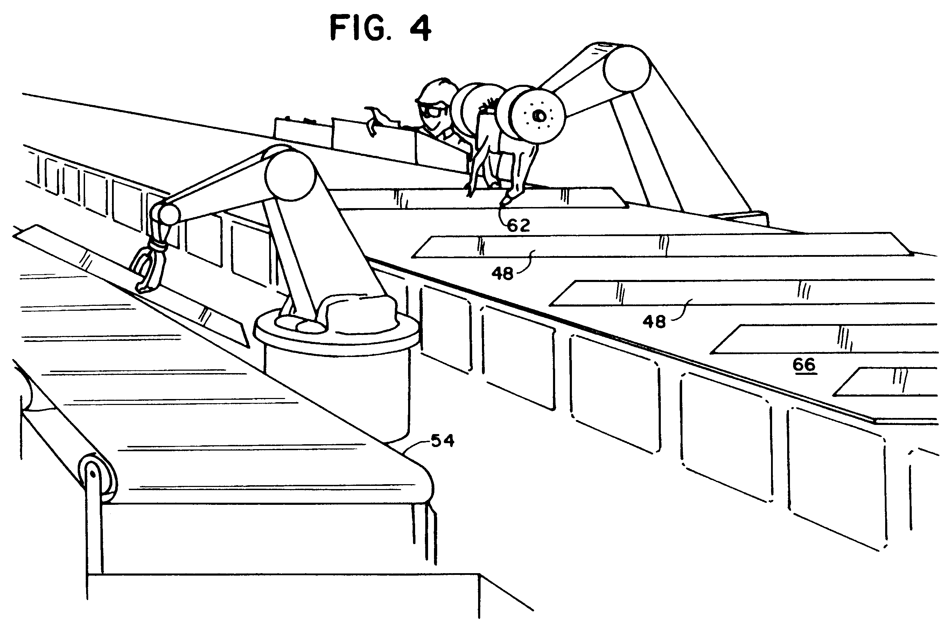

Kick plate stiffeners 48, including lightening hole reinforcements 60 are installed and tack welded robotically at 62 (Figures 1 and 4), then finish welded robotically at 64.

Acceptable flat longitudinal panels 66, with their kick plate stiffeners 48 and lightening hole reinforcements 60 welded in place are run through a steel shot abrasive cabinet 68 where welded areas are spot-blasted (Figure 5).

Flat longitudinal panels requiring repair are shuttled via trolley car to a repair area 70, repaired, and shuttled back to the touch-up blast cabinet 68 and thereafter forwarded as acceptable flat longitudinal panels.

At the painting station 38 (which may be one station serving both lines 26 and 30), the tops and bottoms of the curved and flat panels 32, 66 are coated with a first primer coat of paint, with several inches along each edge left unpainted to facilitate future welding. (The specific coating applied at this stage depends on whether the surface in question, in use, will face cargo, ballast, the external environment underwater or freeboard, or main deck service.)

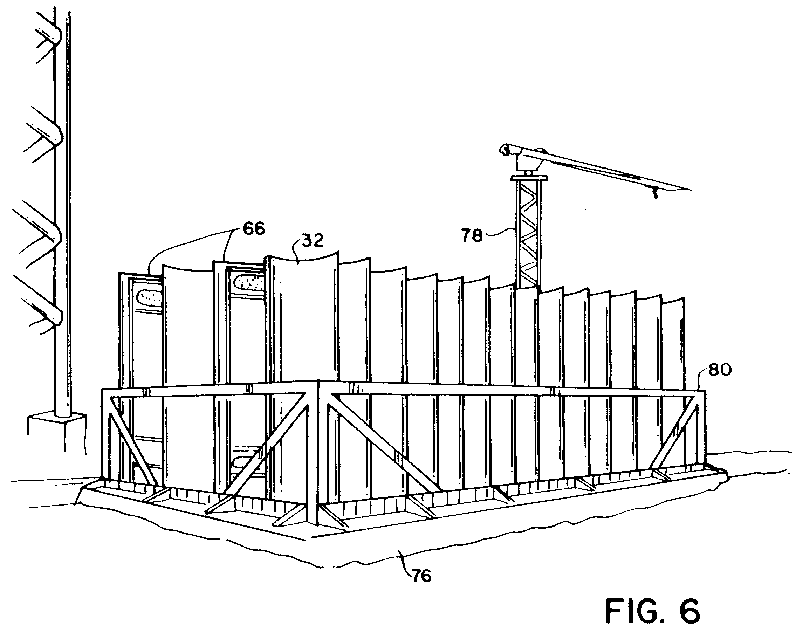

The painted curved and flat longitudinal panels are transferred to the pier 72 by means of a chain conveyor 74 and loaded aboard a barge 76 using a crane 78 (Figure 6). Each barge 76 is provided with rack means 80 which permit one module's worth (with a few spares), of curved panels 32 and flat panels 66 to be loaded aboard in vertical orientation.

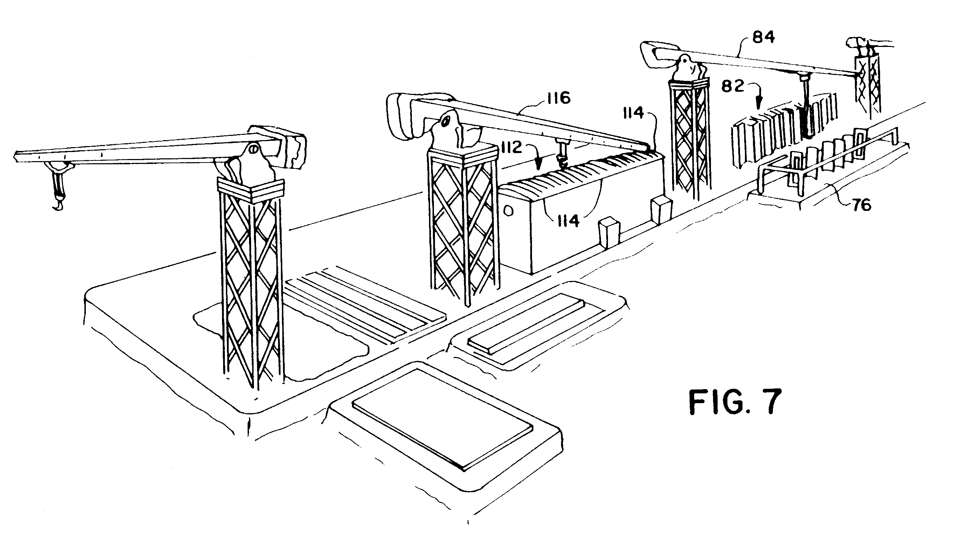

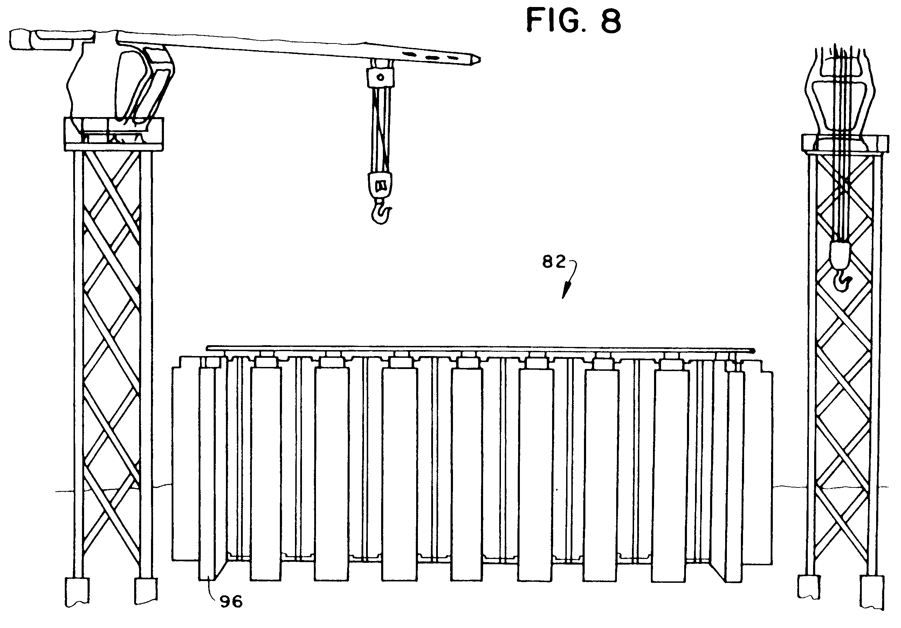

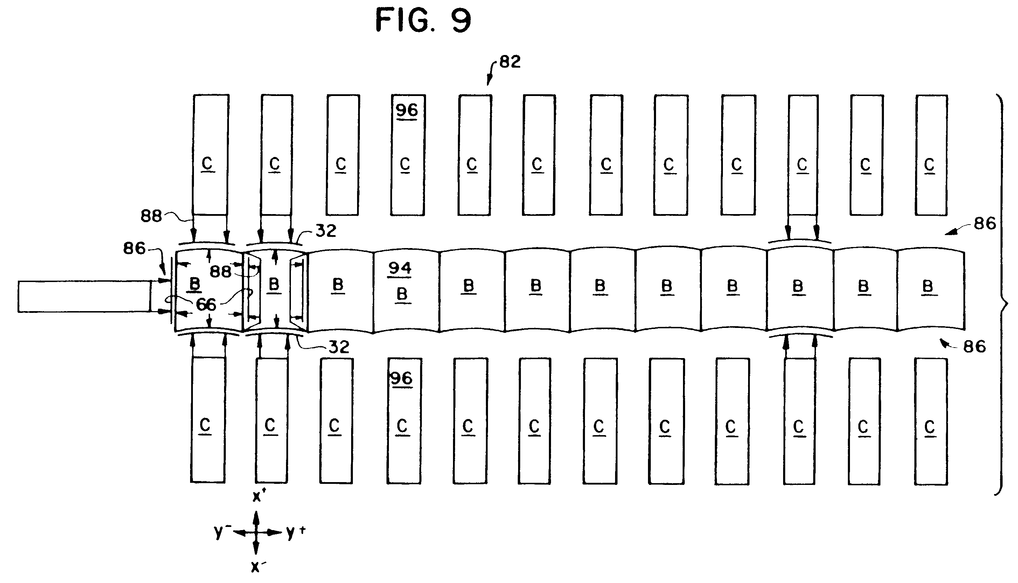

A barge 76, when fully loaded with module panels 32, 66, is moved to the subassembly area (Figure 7) so as to be located alongside a primary longitudinal subassembly fixture 82 embodying the present invention. At this site, the vertical longitudinal panels 32 and 66 are lifted from the barge 76 using a crane 84 and inserted vertically into respective slots 86 in the fixture 82. After all of the panels 32, 66 which are needed for constituting one longitudinal subassembly are located in the respective slots 86, hydraulic jacks 88 Figure 8 confronting each panel from each side and having respectively shaped contact pads 90 Figure 9 are energized for properly conforming and positioning each panel so that its edges 92 are juxtaposed with those of two others at a "T" (except at subassembly ends, where two panel edges meet at an "L").

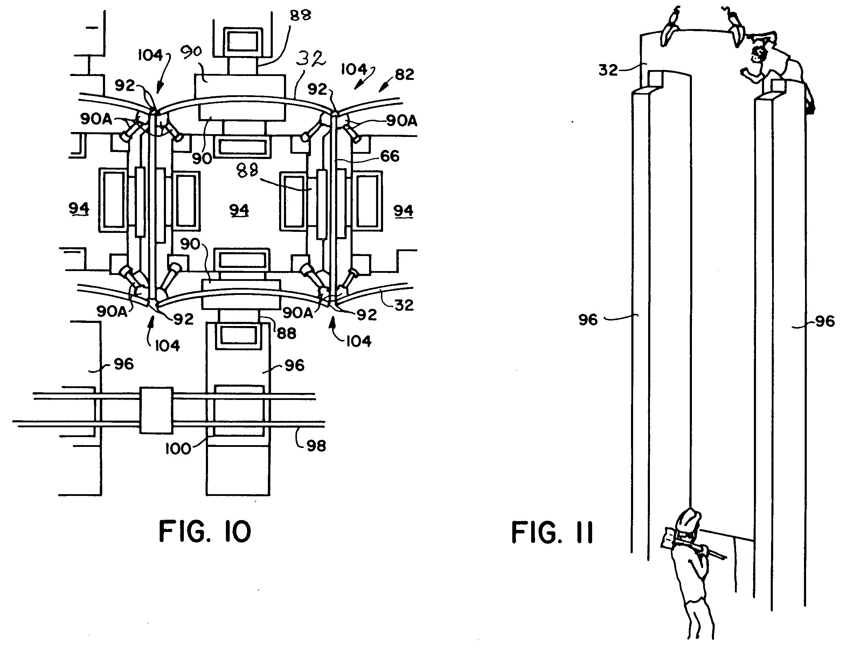

Jacking elements of individual interior towers 94 and exterior towers 96 (Figures 7-12) of the longitudinal subassembly fixture may be removed for repair, routine maintenance and adjustment to different dimensions and configurations, as needed.

Each tower 94, 96 is somewhat taller than the distance between bulkheads in the parallel midbody of the double-walled vessel hull that is to be built using the apparatus and process of the present invention (e.g., somewhat in excess of 50 feet tall).

Each tower 94, 96 may be constructed by driving into the ground four to six pilings (not shown) made of steel or reinforced concrete. Steel frames (i.e., pads) 90 are aligned and mounted to each tower at regular intervals (e.g., of 2-4 feet) along the height of each tower.

The towers 94, 96 are of two different functional types (Figure 9). Exterior towers 96 are of a "C"-type; each is active in the +X or -X direction, depending on whether it confronts an interior tower 94 from one side or the other. Interior towers 94 are of a B-type which is active in +X, -X, +Y and -Y directions. On the interior towers, the pads 90 face in the +X, -X, +Y and -Y directions (except at the two ends of the fixture, where two C-type towers are externally provided, one active only in the +Y direction and the other active only in the -Y direction). On interior towers 94 the Y-facing steel frames are mounted to the towers via horizontally extensible-retractile hydraulic rams 88.

In use, when the fixture 82 is empty, all rams 88 for the steel frames of all towers 94 and 96 are retracted, allowing the various curved panels 32 and flat panels 66 to be lowered into place. As the rams 88 are then extended, the curved plates are jacked by steel frames on the exterior towers against the reactive steel frames jacked against the interior towers, and the flat plates are jacked by the steel frames on the interior towers against the reactive steel frames jacked against adjacent interior towers. Water cooled welding backing shoes 90A capable of being retracted and extended are installed at each corner of each interior tower 94.

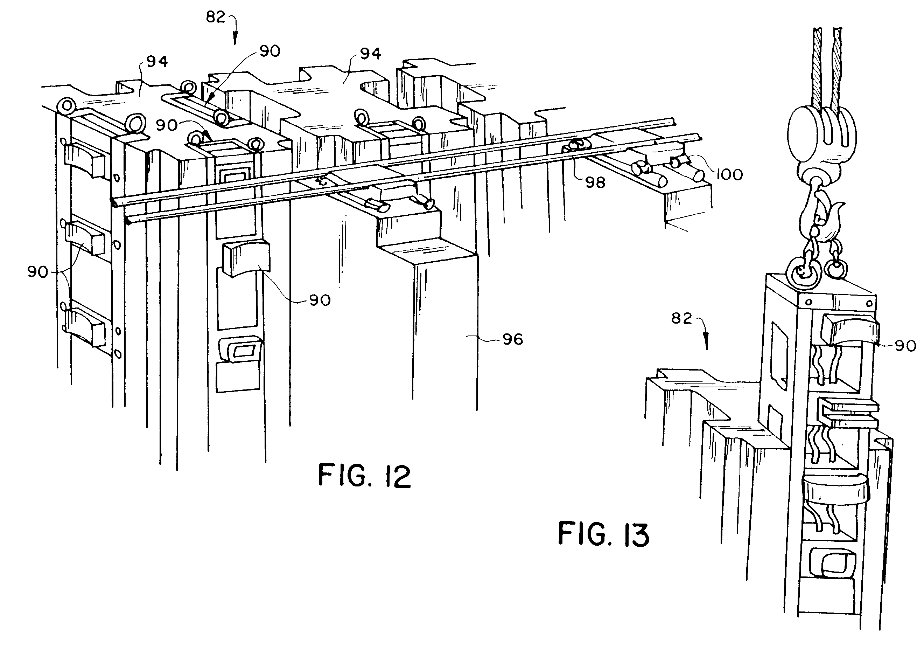

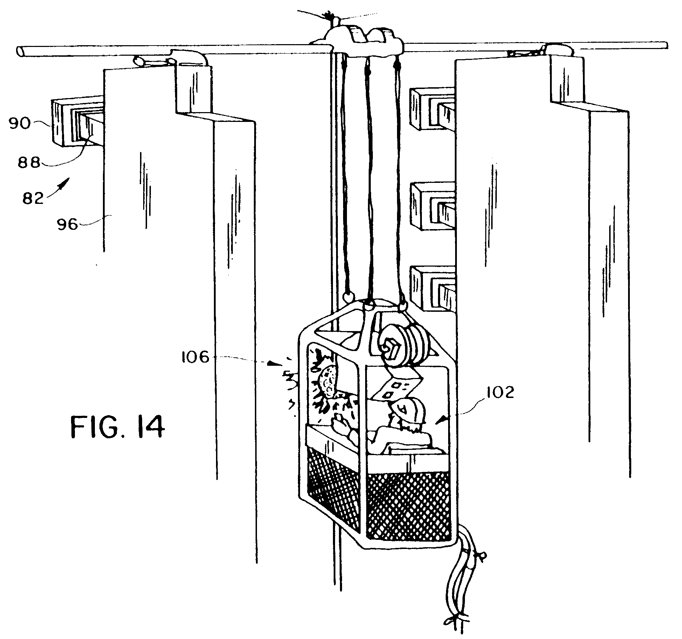

Bar supports 98 on rollers 100 are located at the top of the individual outside towers 96 of the longitudinal subassembly fixture 82 (Figure 12). The purpose of the bar supports 98 is to provide an adjustable support location for a hanging basket-type staging device 102 (Figure 14) at each T-joint intersection 104 of individual longitudinal panels. This hanging basket is utilized for electroslag or electrogas welding equipment 106 and an operator, including equipment for cleaning steel about to be welded (Figure 14). Welding of all of the T-joints of one longitudinal subassembly unit 108 is done simultaneously to avoid distortion.

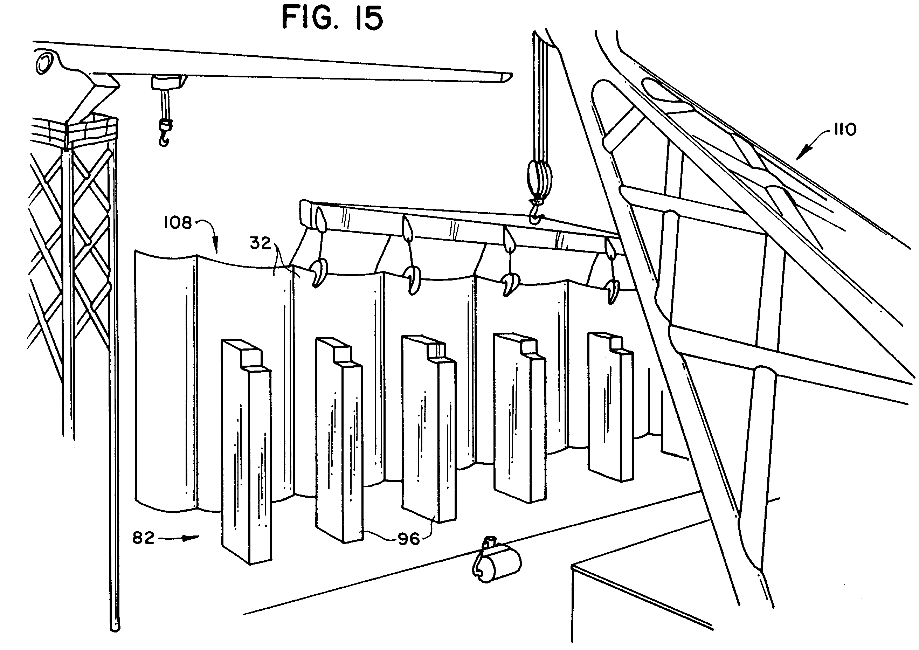

Upon completion of welding, the hydraulic jacks 88 are released, and the longitudinal subassembly unit 108 is lifted from the longitudinal subassembly fixture 82 (Figure 15) utilizing a floating derrick 110 of sufficient capacity (350 tons or greater) and moved to the longitudinal assembly touch-up, blast, and final paint room 112 (Figure 7).

(The time required to process a single longitudinal assembly through the longitudinal subassembly fixture is 24 hours. This includes 8 hours for lifting all individual longitudinal panels off the barge and setting them into final position, 8 hours for electroslag or electrogas welding of all T-joints and 8 hours for maintenance of the fixture, change-out of individual jacking elements (Figure 13), if required, and any other preparation of the fixture to receive the longitudinal panels for the next longitudinal subassembly.)

The longitudinal subassembly touch-up blast and final paint facility 112 (Figure 7) is a building approximately 100 feet long, 20 feet wide and 60 feet high. The roof 114 is removable in sections to permit longitudinal subassemblies 108 to be top-loaded into it. The floor (not shown) of the room 112 is a grating under which recovery and recycling apparatus for abrasive material used for abrasive blasting is located. The floor is reinforced as necessary to support the weight of a longitudinal subassembly 108. A canvas cover is placed over the grating when abrasive blasting is completed and painting commences.

In the room 112, stationary or fixed elevator towers (not shown) equipped with shot-blasting and spray-painting nozzles are located in positions in the building which center them in individual longitudinal cells of the longitudinal subassembly. These elevators are used for automatic shot-blasting and painting of inside surfaces of the longitudinal subassemblies. Further, elevators (not shown) are permanently located along the walls of the building to permit automatic shot blasting and painting of outside surfaces of longitudinal subassemblies. Shot-blasting nozzles inside and outside the cells are located only in way of welded T-joints. Paint spray nozzles inside and outside the cubicles provide full surface coverage. Dust collection equipment (not shown) is provided to remove dust caused by shot blasting. Heating, ventilation and dehumidification equipment (not shown) is provided to control the environment and assure that release of solvents and dust to the atmosphere externally of the building 112 is within clean air standards. All electrical installations are explosion-proof.

Reiterating in sequence the steps carried out in the room 112, the roof sections 114 are removed, a longitudinal subassembly 108 is lowered in a vertical position into the longitudinal assembly touch-up, blast, and final paint facility using the 350-ton floating crane device 110. Shot blast and spray paint nozzles are adjusted as required for the particular longitudinal subassembly. Roof sections 114 are put in place using a tower crane 116.

T-joint welded areas are shot-blasted automatically, as the elevator carriages with the blast nozzles travel the full height of the longitudinal subassembly.

Grating covers are installed on the floor in order to keep paint away from abrasive recovery mechanisms. Structure in way of future bulkhead welding and module joining welding is masked off. All surfaces are then painted with the appropriate paint systems, as the elevator carriages with the paint spray nozzles travel the full height of the longitudinal subassembly. Subsequent coats of paint are applied at appropriate intervals until final paint systems on all surfaces are complete.

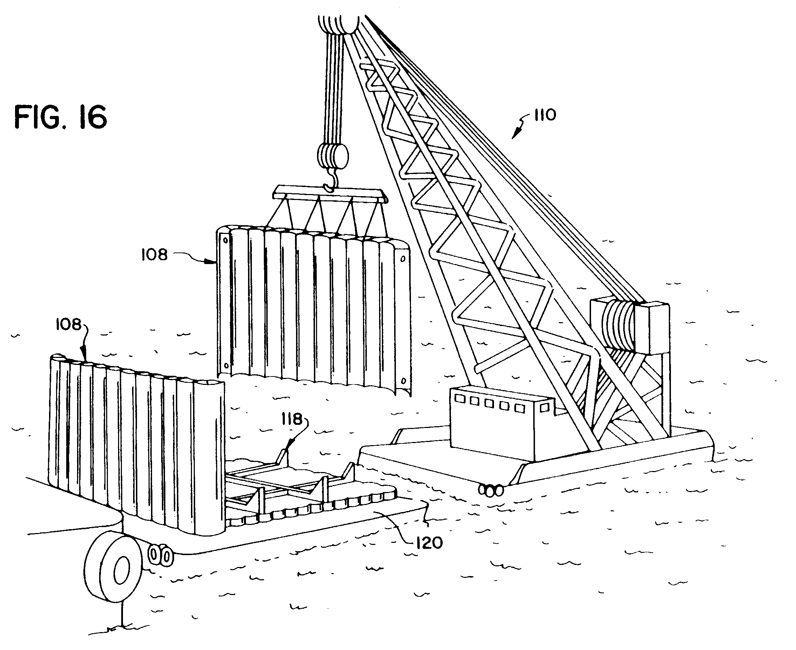

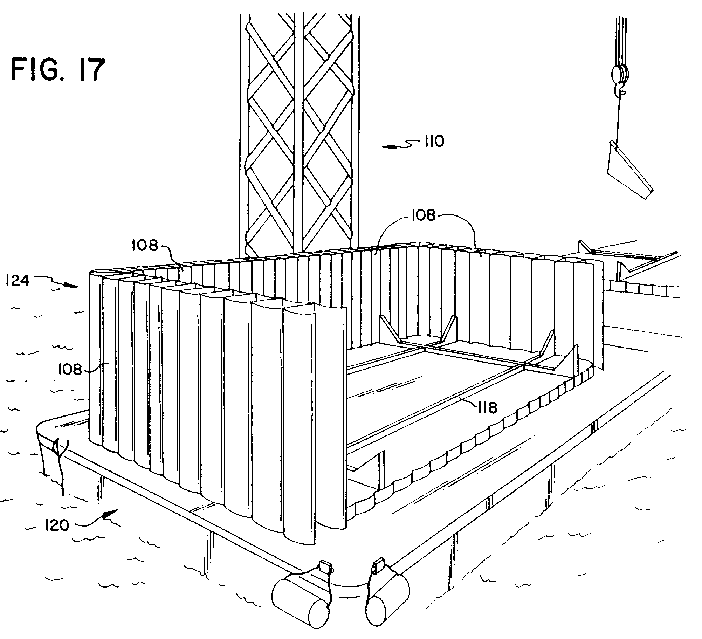

The roof 114 sections are removed by the tower crane 116, and the fully painted longitudinal subassembly 108 is lifted from the longitudinal assembly shot-blast and paint facility 112 using the 350-ton floating derrick 110 and placed in a respective position around a bulkhead subassembly 118, previously positioned on a module assembly pontoon fixture 120 (Figures 16 and 17).

The bulkhead assembly 118 interior to the inner hull may be placed on the module assembly pontoon 120 either by a floating derrick, or by rolling the finished bulkhead from its assembly position adjacent to the module assembly pontoon location.

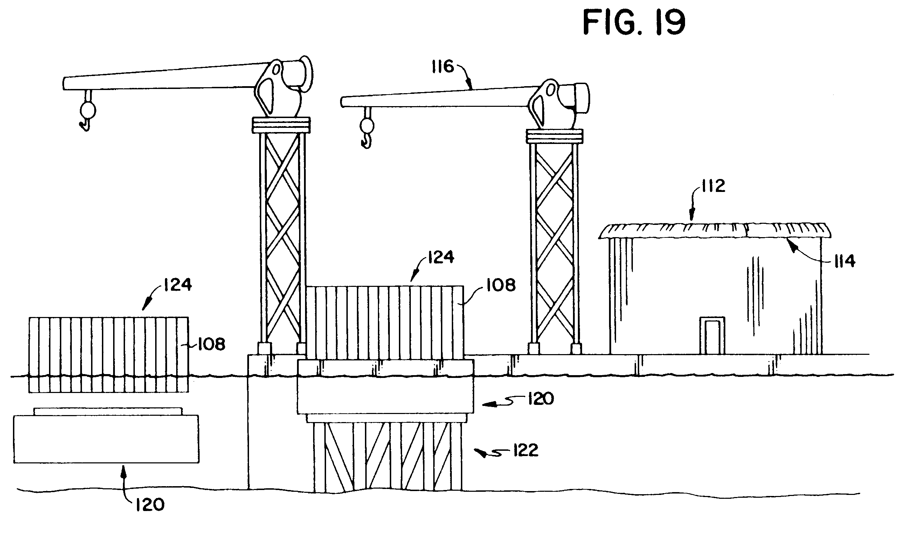

The module assembly pontoon 120 is approximately 200 feet long, 100 feet wide and 10 feet in depth. It is capable of changing its buoyancy by pumping water into, or out of its tanks (not shown). While bulkhead longitudinal subassemblies 108 are being set in place, it rests on an underwater pile-supported grid 122 (Figure 19) to provide stability. In order to permit access by the 350-ton floating derrick 110 to all longitudinal subassembly module assembly locations on the pontoon 120, the module assembly pontoon 120 may be rotated after pumping water out of its tanks and increasing its buoyancy adequate to lift it off the grid 122, and then pumping water back into its tanks after rotation to the desired position so that it again rests on the grid as the next subassembly 108 is emplaced.

The purpose of having a piling supported grid under the pontoon is to enable the pontoon to have more time to respond to sudden load changes, i.e., the setting of a 300-ton longitudinal subassembly near the edge of the pontoon. However, the grid need not be designed to take the full weight of the pontoon and its contents, since the pontoon's own buoyancy can support most of the weight. The grid need only support that load weight which the pontoon cannot quickly respond to and, for convenience, the buoyancy lost by the pontoon when sitting on the grid at normal high high tide as the tide goes to low low. There is usually sufficient warning time to ballast down the pontoon so it does not float off on extraordinary high tides.

The piling under a pontoon grid, therefore, only has to support a portion of the load, invariably less than half. (In fact, floating pontoon dry docks do not use grids at all, relying totally on buoyancy. Graving dock floors and piling, which must support the full load are, therefore, much more expensive to construct than grids.)

The deck of the module assembly pontoon fixture has precisely located guides welded to it. As each subassembly is lowered in place, the bottom of the flat and curved panels of the subassembly are forced into the precise position dictated by the guides.

The top end of the subassembly is adjusted until optical alignment determines it is perfectly vertical. This adjustment is accomplished by existing techniques of using turn buckles and "come alongs" attached to the subassembly at one end and the bulkhead, pontoon or adjacent subassembly at the other end. When all subassemblies are set in this manner, all vertical joints are ready for welding.

After all the longitudinal subassemblies 108 for one module are in place around the bulkhead subassembly 118 on the module assembly pontoon 120, finally fit in place and temporarily secured, downhand welding of the longitudinal subassemblies to the perimeter of the bulkhead subassembly is carried out to produce a module 124.

Vertical elevator assemblies (not shown, but similar to the one shown in Figure 14) containing electroslag/electrogas welding machines (and, optionally, blasting and painting apparatus) are put in place at all external and cargo tank interior locations where there are vertical module assembly joints to weld. All vertical module assembly joints are welded concurrently to minimize distortion using the electroslag/electrogas process.

Bulkhead structure within the ballast 108, 118 tank area of the module 124 under construction is installed, fit and welded as the subassemblies are being put in place and welded. Piping assemblies (not shown) are also installed during this time. (Some final installation and pipe hanger welding may be done on piping located on the tank top or in ballast tanks after erection of the module and orientation into its final position.)

Areas disturbed by welding done during the module assembly stage are preferably blasted by the least disruptive, most efficient, and environmentally acceptable approach. This can be by Vacublast blasting or dry ice blasting. These blasted areas are then final painted either by spray gun, brush or roller depending upon impact on other ongoing work and impact on air quality.

A temporary bulkhead with a gasket (not shown) is installed across the inner bottom tanks (cells) at the top of the module 124 in its vertical, module assembly position. Temporary bulkheads (not shown) are also installed in each side tank cubicle (cell) attached to a kick bracket (plate) at least 2.5 feet from the top.

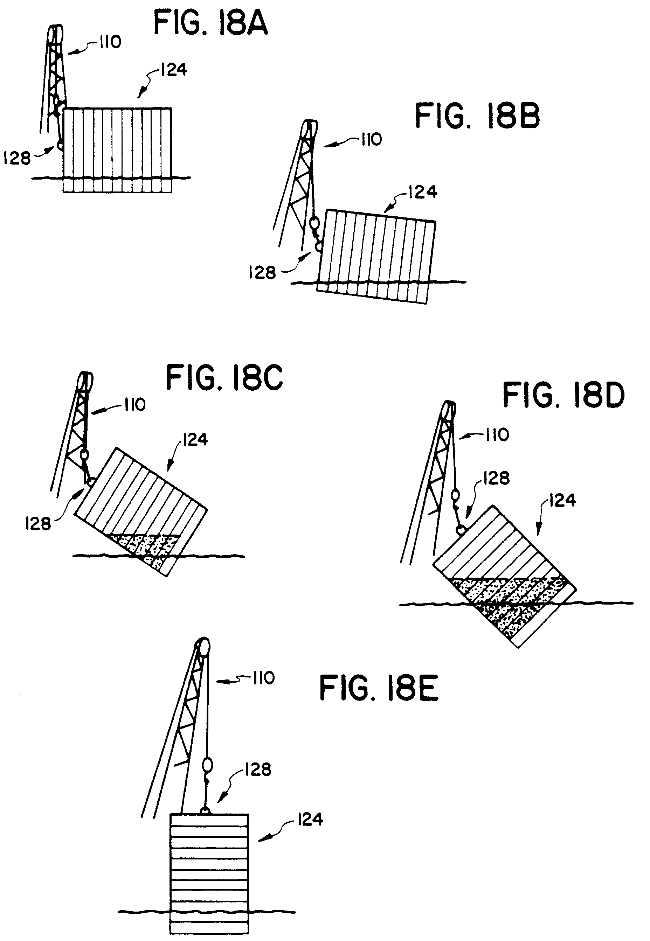

After completion of the above and any other work most efficiently performed in the vertical, module assembly position, the module assembly pontoon is floated off its supporting grid and sunk leaving the module afloat on its bulkhead, as indicated in Figure 18A and the left side of Figure 19.

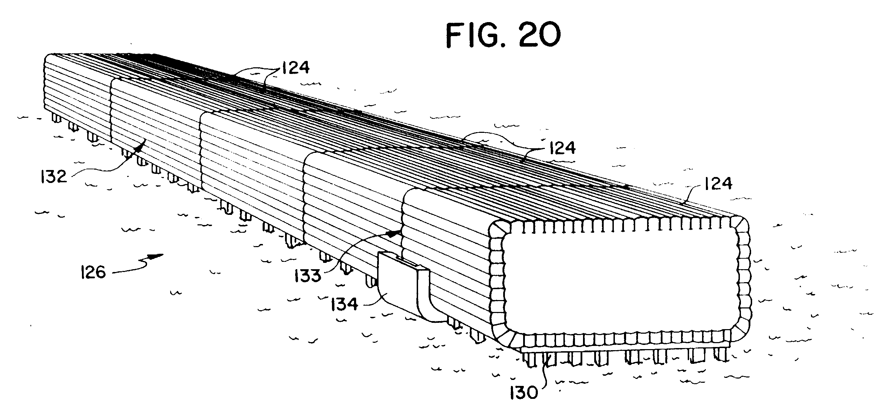

The module 124 floating on its bulkhead is moved by tug to a location convenient to the module joining facility 126 (Figure 20). The 350-ton floating derrick 110 is attached to lifting pads 128 on the deck structure (Figure 18A) located to provide a horizontal keel for the module 124 after erection (i.e., after tilting over to a horizontal orientation), considering weight and buoyancy distribution (Figure 18E). The derrick 110 is used to keep a lifting strain on the module throughout erection.

For erecting the module 124 that is floating on its bulkhead, its inner bottom is flooded with salt water. This heels the module approximately 16 degrees in the direction of the inner bottom (Figure 18B). Water is then progressively pumped into the crotch of the triangle bounded by the bulkhead and the innerbottom tank top (Figures 18C and 18D). This water and its free surface causes the module to increasingly heel in the same direction until the water reaches the limit of the tank top at the module's open end (Figure 18D). From this point on, the lifting capacity of the derrick 110 permits it to complete the erection of the module to a horizontal keel orientation as water is pumped out of the inner bottom to permit the module to be buoyant, once erect (Figure 18E).

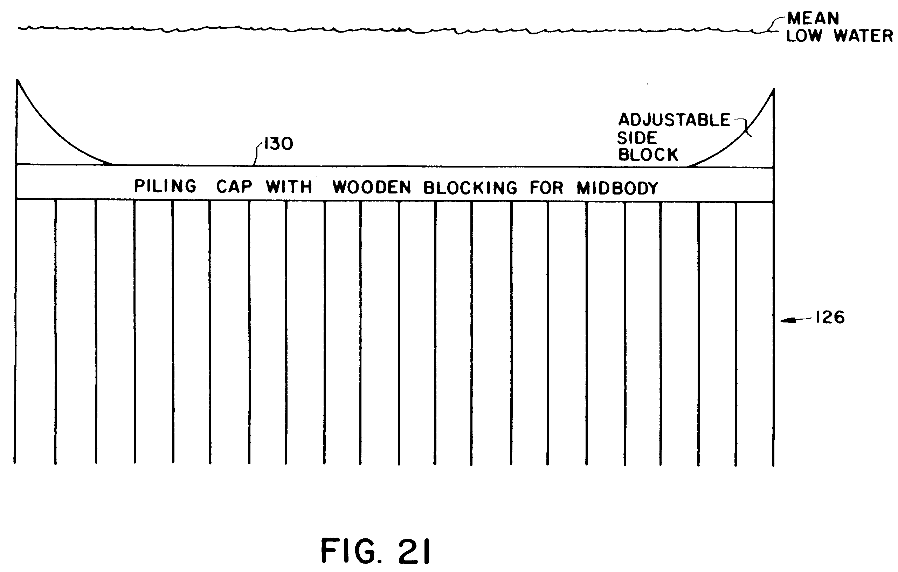

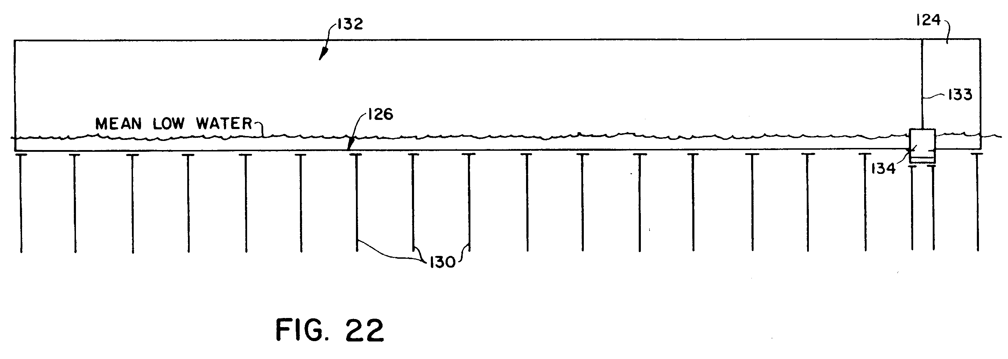

As modules are sequentially assembled and erected afloat, they are moved to the module joining facility 126 (Figures 20, 21, 22 and 23) for joining. The module joining facility comprises a module joining grid 130 upon which the entire midbody 132 (at its various stages of completion) is set, with the exception of approximately 20 feet in way of the underwater intermodule joint 133 in the process of being made-up. This latter region rests in a module joining pontoon caisson 134.

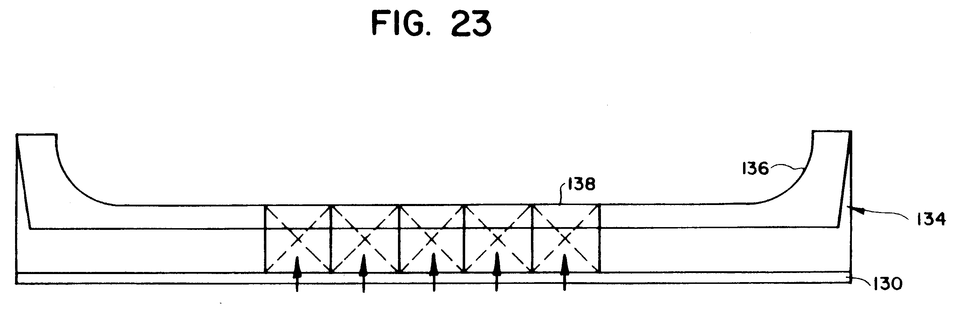

The module 124 to growing midbody 132 joining process starts as soon as the first two modules are afloat and erect. They are each towed to the module joining facility and positioned in it, with the butt to be joined between them floating over the module joining pontoon caisson 134, and their other ends on the grid 130 adjoining the pontoon caisson 134. The pontoon caisson has removable chambers (Figure 23) to permit its width to be varied for different sized ships.

These first two modules are centered over the central grid with the ends between them butting at the longitudinal center of the caisson 130. Water is pumped into the side ballast tanks of both modules 124, which forces submergence of the modules so both are hard aground at high tide on the grid 130, the caisson blocks 136 and the sill gaskets 138. The joint between the caisson sill and the ship's hull is sealed, and the caisson is pumped dry.

Tank tops, bottom shell deck and under deck structural areas of the butt are prepared for welding and welded. Exterior and interior areas in way of the butt where paint is damaged by welding are blasted by the least disruptive and most efficient process (for example Vacublast blasting or dry ice blasting) and painted by the least disruptive process (spray, brush or roller) as welding proceeds. Vertical butt welds joining wing ballast tanks are prepared for welding, welded to the maximum extent using electroslag/electrogas welding procedures, blasted and painted as above. Butts between interior flat panel longitudinals are welded and painted as convenient.

The joined modules are relocated further along the module joining facility 126 as soon as underwater welding and painting is complete (approximately 7 days) by pumping out wing tank ballast, moving the growing midbody 48 feet inboard, reballasting the wing tanks and centering the growing midbody hard aground on the grid 130. Then, the next module 124 is erected in the caisson and the above process is repeated. In this manner, all modules 124 comprising the cargo tanks for a single ship are joined into a single midbody section 132 to be conventionally joined to existing or new bows and sterns in a shipyard graving dock.

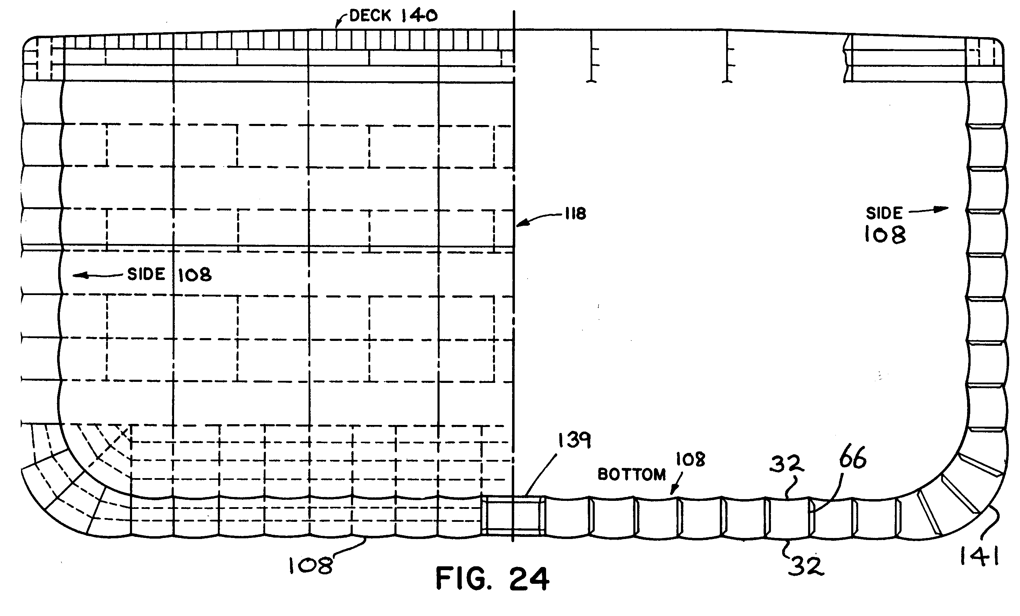

In its currently most preferred form, a tanker midbody produced in accordance with the invention preferably has the shapes and features depicted in Figures 24-27.

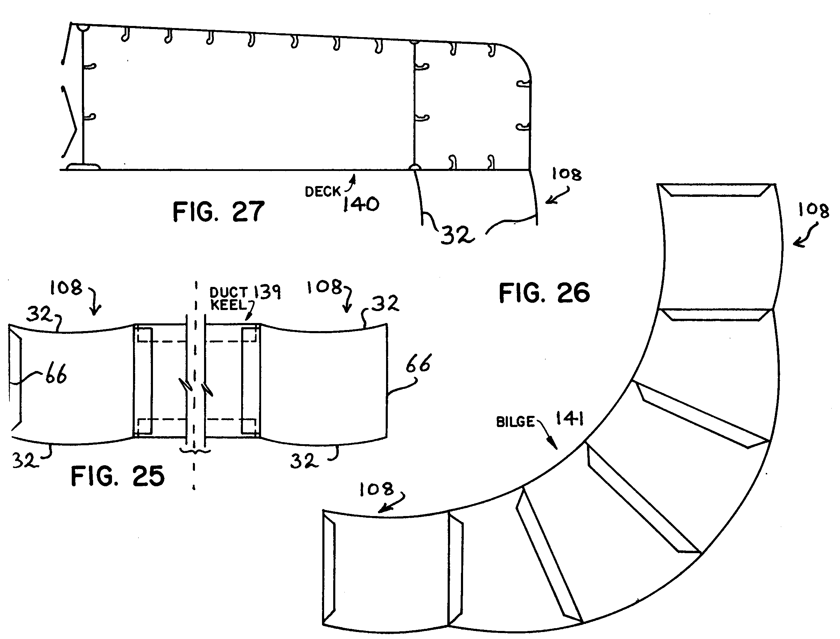

Figure 24 is a transverse cross-sectional view of a double-hulled vessel, through the midbody 132 thereof, a bulkhead 118 being illustrated in the left half of the view. Figure 25 is an enlarged scale fragmentary transverse cross-sectional view showing the region where two longitudinal hull subassemblies 108 join a duct keel 139. Figure 26 is an enlarged scale fragmentary transverse cross-sectional view of the vessel hull of Figure 24, showing the region where two longitudinal hull subassemblies 108 join one another at the bottom-to-side transition 141. Figure 27 is an enlarged scale fragmentary transverse cross-sectional view of the vessel hull of Figure 24, showing the region where a longitudinal hull subassembly 108 joins the underside of the outer margin of the deck structure 140 (which may be conventional, as may be the bow and stern sections of the vessel).

## Claims

1. A longitudinal subassembly fixture for fabricating subassemblies for a vessel hull, said fixture comprising means for supporting components of a subassembly (108) and means (102,106) for welding vertical joints between the components,
characterised in that the supporting means comprises:
three rows of vertical towers (94,96) arranged as one inner row of towers (94), and two outer rows of towers (96) located on opposite sides of said inner row;
each tower (94) in said inner row having four working faces, arranged as two facing respective ones of said outer rows of towers (96), and two facing in opposite directions along said inner row of towers (94); each tower (96) in said outer rows having one working face facing towards said inner row of towers (94);
each working face having mounted thereto a respective frame means (90), the frame means (90) of the towers being arranged in pairs; each frame means (90) in each pair being mounted to its respective tower (94,96) by jack means (88) for movement towards and away from the respective tower, and within each pair of frame means (90), the two respective frame means (90) being provided with complementary surfaces for engaging and holding between them a respective plate (32,66); and
said welding means (102, 106) being mounted to said towers (96) and arranged for welding vertical T-joints (104) between respective abutting edges (92) of respective groups of three plates (32,66) while such plates are engaged and held between adjoining pairs of frame means (90).

2. A fixture according to claim 1 wherein each frame means (90) on a tower (96) in an outer row spacedly confronts a frame means on a tower (94) in said inner row, and each frame means (90) on an inner row tower (94) which is provided on a face which faces along said inner row spacedly confronts another said frame means (90) on an adjacent said inner row tower (94); each frame means in each pair being mounted to the respective tower by said jack means (88) for movement such that within each pair of frame means, each frame means can be forced into closer relation with the other and released to move away from the other; and the respective frame means (90) being arranged for engaging and holding the respective plates (32,66) between them with a predetermined shape and spatial orientation, with two of such plates (32) engaged and held between adjoining pairs of frames means respectively mounted one frame means to a tower in said inner row and a tower in said outer row, and with the other one of such plates (66) engaged and held between a respective pair of frame means respectively mounted one frame means each to two adjoining towers in said inner row.

3. A fixture according to claim 1 or 2 wherein each said pair of frame means which includes one frame means (90) mounted to a tower (96) in one outer row and another frame means mounted to a tower (94) in said inner row has said complementary surfaces thereof configured for engaging and holding a plate (32) which is cylindrically arcuate about a vertical axis.

4. A fixture according to claim 1 or 2 wherein the pairs of said frame means which are mounted between the towers (96) in one of said outer rows and the towers (94) in said inner row, and the pairs of said frame means which are mounted between the towers (96) in the other of said outer rows and the towers (94) in said inner row, all have the complementary surfaces thereof oriented to hold respective curved plates (32) so that the curvatures thereof are all convex in the same direction.

5. A fixture according to any preceding claim wherein said frame means (90) includes hydraulically operated horizontally acting jacks (88) mounted to respective towers (94,96).

6. A fixture according to any preceding claim wherein the welding means (106) comprise electrogras welding means.

7. A fixture according to any of claims 1 to 5 wherein the welding means (106) comprise electroslag welding means.

8. A fixture according to any preceding claim wherein said means (102,106) for welding vertical T-joints comprises for each T-joint (104), a vertically travelling welding means.

9. A fixture according to claim 8 wherein the welding means comprises, for each T-joint (104), a welder (106), and two cooling shoes (90A), one mounted at each of two respective corners of adjoining ones of said inner row towers (94).

10. A fixture according to any preceding claim wherein the said welding means (102,106) are arranged to weld all of the said T-joints (104) simultaneously.

11. A fixture according to any preceding claim wherein said vertical towers (94,96) have fixed bases.

12. A fixture according to any preceding claim in association with apparatus for assembling a bulkhead (118) with a plurality of longitudinal subassemblies (108) for a module (124) for a parallel midbody (132) for a double hull vessel, comprising:
means for supporting a horizontally extending bulkhead (118) susceptible to being rotated about a vertical axis
a derrick (110) for lifting and depositing a succession of longitudinal subassemblies (108) for a module (124) for a parallel midbody (132) for a double hull vessel, said derrick being adapted to lift said subassemblies (108) and set each in place around the perimeter of said bulkhead (118), whereby said bulkhead may be rotated between uses of the derrick (110) to place said subassemblies (108) successively thereon, and whereby said subassemblies (108) may be welded to one another and to said bulkhead (118).

13. A fixture and associated apparatus according to claim 12 wherein the means for supporting the horizontally extending bulkhead is arranged on a variable buoyancy barge (120).

## Patentansprüche

1. Längsuntereinheit-Standvorrichtung zur Herstellung von Untereinheiten für einen Schiffsrumpf, wobei die Standvorrichtung Mittel zum Halten der Komponenten einer Untereinheit (108) und Mittel (102, 106) zum Schweißen von vertikalen Verbindungen zwischen den Komponenten aufweist,
**dadurch gekennzeichnet,** daß die Haltemittel umfassen:
drei Reihen von vertikalen Türmen (94, 96), die als eine innere Reihe von Türmen (94) und zwei äußere Reihen von Türmen (96) angeordnet sind, die sich an gegenüberliegenden Seiten der inneren Reihe befinden;
wobei jeder Turm (94) in der inneren Reihe vier Arbeitsseiten hat, die so angeordnet sind, daß zwei Seiten auf die zugehörigen Seiten der äußeren Turmreihen (96) zeigen und zwei Seiten in entgegengesetzte Richtungen entlang der inneren Turmreihe (94) zeigen; wobei jeder Turm (96) in den äußeren Reihen eine Arbeitsseite hat, die zur inneren Turmreihe (94) zeigt;
wobei jede Arbeitsseite jeweils ein daran angebrachtes Rahmenmittel (90) hat, wobei die Rahmenmittel (90) der Türme paarweise angeordnet sind; wobei jedes Rahmenmittel (90) in jedem Paar an seinem zugehörigen Turm (94, 96) durch Hubmittel (88) zur Bewegung in Richtung auf den zugehörigen Turm und von diesem weg angebracht ist, und wobei in jedem Paar von Rahmenmitteln (90) die beiden jeweiligen Rahmenmittel (90) mit komplementären Flächen versehen sind, um zwischen diesen eine zugehörige Platte (32, 66) zu greifen und zu halten; und
wobei die Schweißmittel (102, 106) an den Türmen (96) angebracht und angeordnet sind, um zwischen jeweils anliegenden Kanten (92) entsprechender Gruppen von drei Platten (32, 66) vertikale T-Verbindungen zu schweißen, während diese Platten zwischen zwei benachbarten Paaren von Rahmenmitteln (90) gegriffen und gehalten sind.

2. Standvorrichtung nach Anspruch 1, wobei jedes Rahmenmittel (90) an einem Turm (96) in einer äußeren Reihe mit Abstand einem Rahmenmittel an einem Turm (94) in der inneren Reihe gegenübersteht und jedes Rahmenmittel (90) an einem Turm (94) der inneren Reihe, das an einer Seite vorgesehen ist, die entlang der inneren Reihe zeigt, mit Abstand einem anderen Rahmenmittel (90) an einem benachbarten Turm (94) der inneren Reihe gegenübersteht; wobei jedes Rahmenmittel in jedem Paar an dem zugehörigen Turm durch die Hubmittel (88) beweglich angebracht ist, so daß bei jedem Paar von Rahmenmitteln jedes Rahmenmittel enger gegen das andere gedrückt und wieder von dem anderen wegbewegt werden kann; und wobei die jeweiligen Rahmenmittel (90) angeordnet sind, um zwischen sich die zugehörigen Platten (32, 66) mit einer bestimmten Form und räumlichen Ausrichtung zu greifen und zu halten, wobei zwei dieser Platten (32) zwischen zwei benachbarten Paaren von Rahmenmitteln gegriffen und gehalten sind, wobei jeweils ein Rahmenmittel an einem Turm in der inneren Reihe und an einem Turm in der äußeren Reihe angebracht ist, und wobei die andere dieser Platten (66) zwischen einem zugehörigen Paar von Rahmenmitteln gegriffen und gehalten ist, wobei die Rahmenmittel jeweils an benachbarten Türmen in der inneren Reihe angebracht sind.

3. Standvorrichtung nach Anspruch 1 oder 2, wobei jedes Paar von Rahmenmitteln, das ein Rahmenmittel (90), das an einem Turm (96) in einer äußeren Reihe angebracht ist, und ein anderes Rahmenmittel aufweist, das an einem Turm (94) in der inneren Reihe angebracht ist, komplementäre Oberflächen hat, die so gestaltet sind, um eine um eine vertikale Achse zylindrisch gebogene Platte (32) zu greifen und zu halten.

4. Standvorrichtung nach Anspruch 1 oder 2, wobei die Paare von Rahmenmitteln, die zwischen den Türmen (96) in einer der äußeren Reihen und den Türmen (94) in der inneren Reihe angebracht sind, und die Paare von Rahmenmitteln, die zwischen den Türmen (96) in der anderen der äußeren Reihen und den Türmen (94) in der inneren Reihe angebracht sind, ihre komplementären Oberflächen alle so ausgerichtet haben, um zugehörige gekrümmte Platten (32) so zu halten, daß deren Krümmungen in derselben Richtung alle konvex sind.

5. Standvorrichtung nach einem der vorhergehenden Ansprüche, wobei das Rahmenmittel (90) hydraulisch betriebene, horizontal wirkende Hubmittel (88) aufweist, die an den jeweiligen Türmen (94, 96) angebracht sind.

6. Standvorrichtung nach einem der vorhergehenden Ansprüche, wobei die Schweißmittel (106) Elektrogasschweißmittel enthalten.

7. Standvorrichtung nach einem der vorhergehenden Ansprüche, wobei die Schweißmittel (106) Elektroschlackeschweißmittel enthalten.

8. Standvorrichtung nach einem der vorhergehenden Ansprüche, wobei das Mittel (102, 106) zum Schweißen vertikaler T-Verbindungen für jede T-Verbindung (104) ein vertikal verfahrbares Schweißmittel enthält.

9. Standvorrichtung nach Anspruch 8, wobei das Schweißmittel für jede T-Verbindung (104) einen Schweißer (106) und zwei Kühlschuhe (90A) enthält, von denen je einer an jeder von zwei zugehörigen Ecken benachbarter Türme (94) der inneren Reihe montiert ist.

10. Standvorrichtung nach einem der vorhergehenden Ansprüche, wobei die Schweißmittel (102, 106) angeordnet sind, um alle T-Verbindungen (104) gleichzeitig zu schweißen.

11. Standvorrichtung nach einem der vorhergehenden Ansprüche, wobei die vertikalen Türme (94, 96) feststehende Basen haben.

12. Standvorrichtung nach einem der vorhergehenden Ansprüche in Verbindung mit einer Vorrichtung zum Zusammenbauen einer Schottwand (118) mit einer Anzahl von Längsuntereinheiten (108) für ein Modul (124) für einen parallelen Mittelkörper (132) für einen Doppelschiffsrumpf, mit:
Mitteln zum Halten einer horizontal ausgerichteten Schottwand (118), die um eine vertikale Achse gedreht werden kann,
einem Schwimmkran (110) zum Anheben und Absenken einer Anzahl von Längsuntereinheiten (108) für ein Modul (124) für einen parallelen Mittelkörper (132) für einen Doppelschiffsrumpf, wobei der Schwimmkran dazu ausgestaltet ist, die Untereinheiten (108) anzuheben und jede an einer Position am Rand der Schottwand (118) abzusetzen, wobei die Schottwand zwischen den Anwendungen des Schwimmkrans (110) gedreht werden kann, um die Untereinheiten (108) nacheinander daran zu plazieren, und wobei die Untereinheiten (108) miteinander und mit der Schottwand (118) verschweißt werden können.

13. Standvorrichtung und mit dieser in Beziehung stehende Vorrichtung nach Anspruch 12, wobei das Mittel zum Halten der horizontal ausgerichteten Schottwand auf einer Schute mit variablem Auftrieb (120) angeordnet ist.

## Revendications

1. Installation de sous-assemblage longitudinal destinée à la fabrication de sous-ensembles de coque de navire, l'installation comprenant un dispositif de support d'éléments d'un sous-ensemble (108) et un dispositif (102, 106) de soudage de joints verticaux entre les éléments,
caractérisée en ce que le dispositif de support comprend :
trois rangées de tours verticales (94, 96) placées sous forme d'une rangée interne de tours (94) et de deux rangées externes de tours (96) placées de part et d'autre de la rangée interne,
chaque tour (94) de la rangée interne ayant quatre faces de travail, disposées de manière que deux faces soient tournées vers les rangées externes respectives de tours (96) et deux autres soient tournées en sens opposés le long de la rangée interne de tours (94), chaque tour (96) des rangées externes ayant une face de travail tournée vers la rangée interne de tours (94),
chaque face de travail comprenant un dispositif à châssis respectif (90), les dispositifs à châssis (90) des tours étant disposés par paires, chaque dispositif à châssis (90) de chaque paire étant monté sur sa tour respective (94, 96) par des dispositifs à vérin (88) permettant un déplacement alternatif par rapprochement et éloignement de la tour respective et, dans chaque paire de dispositifs à châssis (90), les deux dispositifs respectifs à châssis (90) ont des surfaces complémentaires destinées à coopérer avec une plaque respective (32, 66) placée entre elles et à maintenir cette plaque, et
le dispositif (102, 106) de soudage étant monté sur les tours (96) et étant destiné à souder des joints verticaux en T (104) entre des bords respectifs en butée (92) des groupes respectifs de trois plaques (32, 66) lorsque ces plaques sont en contact et sont maintenues entre des paires adjacentes de dispositifs à châssis (90).

2. Installation selon la revendication 1, dans laquelle chaque dispositif à châssis (90) placé sur une tour (96) d'une rangée externe est en face et à distance d'un dispositif à châssis d'une tour (94) de la rangée interne, et chaque dispositif à châssis (90) d'une tour (94) de la rangée interne est placé sur une face tournée le long de la rangée interne et en face et à distance d'un autre dispositif à châssis (90) d'une tour adjacente (94) de la rangée interne, chaque dispositif à châssis de chaque paire étant monté sur la tour respective par le dispositif à vérin (88) afin qu'il se déplace d'une manière telle que, dans chaque paire de dispositifs à châssis, chaque dispositif à châssis puisse être rapproché à force de l'autre et libéré afin qu'il s'écarte de l'autre, et les dispositifs respectifs à châssis (90) sont destinés à venir en coopération avec les plaques respectives (32, 66) et à les maintenir entre eux avec une configuration et une orientation prédéterminées dans l'espace, deux des plaques (32) étant en coopération entre des paires adjacentes de dispositif à châssis et étant maintenues par ces dispositifs qui sont montés l'un sur une tour de la rangée interne et l'autre sur une tour de la rangée externe, l'autre des plaques (66) étant en coopération entre une paire respective de dispositifs à châssis qui la maintiennent, et qui sont montés chacun sur une tour de deux tours adjacentes de la rangée interne.

3. Installation selon la revendication 1 ou 2, dans laquelle chaque paire de dispositifs à châssis qui comprend un dispositif à châssis (90) monté sur une tour (96) d'une rangée externe et un autre dispositif à châssis monté sur une tour (94) de la rangée interne a des surfaces complémentaires dont la configuration permet la coopération avec une plaque (32) et le maintien de celle-ci avec une courbure cylindrique autour d'un axe vertical.

4. Installation selon la revendication 1 ou 2, dans laquelle les paires de dispositifs à châssis qui sont montés entre les tours (96) dans l'une des rangées externes et les tours (94) de la rangée interne, et les paires de dispositifs à châssis qui sont montés entre les tours (96) de l'autre des rangées externes et les tours (94) de la rangée interne ont tous des surfaces complémentaires orientées afin qu'elles maintiennent des plaques courbes respectives (32) d'une manière telle que leurs courbures sont toutes convexes dans la même direction.

5. Installation selon l'une quelconque des revendications précédentes, dans laquelle les dispositifs à châssis (90) comprennent des vérins (88) commandés hydrauliquement et agissant horizontalement, montés sur les tours respectives (94, 96).

6. Installation selon l'une quelconque des revendications précédentes, dans laquelle le dispositif de soudage (106) est un dispositif de soudage à gaz protecteur.

7. Installation selon l'une quelconque des revendications 1 à 5, dans laquelle le dispositif de soudage (106) est un dispositif de soudage sous laitier électroconducteur.

8. Installation selon l'une quelconque des revendications précédentes, dans laquelle le dispositif (102, 106) de soudage des joints verticaux en T comprend, pour chaque joint en T (104), un dispositif de soudage qui se déplace verticalement.

9. Installation selon la revendication 8, dans laquelle le dispositif de soudage comporte, pour chaque joint en T (104), un organe de soudage (106) et deux patins (90A) de refroidissement, montés chacun à l'un de deux coins respectifs de tours adjacentes parmi les tours (94) de la rangée interne.

10. Installation selon l'une quelconque des revendications précédentes, dans laquelle les dispositifs de soudage (102, 106) sont disposés afin qu'ils soudent simultanément tous les joints en T (104).

11. Installation selon l'une quelconque des revendications précédentes, dans laquelle les tours verticales (94, 96) ont des bases fixes.

12. Installation selon l'une quelconque des revendications précédentes en association avec un appareil d'assemblage d'une cloison (118) avec plusieurs sous-ensembles longitudinaux (108) destinés à un module (124) d'un tronçon médian parallèle (132) d'un navire à double coque, comprenant :
un dispositif de support d'une cloison (118) disposée horizontalement et qui peut être tournée autour d'un axe vertical,
une grue (110) destinée au levage et au dépôt d'une série de sous-ensembles longitudinaux (108) pour la formation d'un module (124) d'un tronçon médian parallèle (132) de navire à double coque, la grue étant destinée à soulever les sous-ensembles (108) et à les placer chacun en position à la périphérie de la cloison (118), si bien que la cloison peut être tournée entre les utilisations de la grue (110) afin que les sous-ensembles (108) soient placés successivement sur elle, et les sous-ensembles (108) peuvent être soudés les uns aux autres et à la cloison (118).

13. Installation et appareil associé selon la revendication 12, dans lesquels le dispositif de support de la cloison disposée horizontalement est placé sur un chaland (120) à flottabilité variable.
